# EUROPEAN PATENT APPLICATION

(11) **EP 2 393 261 A1**
(43) Date of publication of application: **07.12.2011**
(21) Application number: 10305599.2
(22) Date of filing: 04.06.2010
(51) Int. Cl.: H04L 29/08, H04W 4/02, G06Q 20/00

(54) **A portable device, system and a method for preventing a misuse of data originating from the portable device**

(71) Applicant: Gemalto SA, 92190 Meudon (FR)
(72) Inventor: Sjarif, Krishna, 589487, SINGAPORE (SG); Winston, Yeo, 589487, SINGAPORE (SG)

(57) **Abstract**

The invention relates to a portable device 14 for preventing a misuse of data originating from the portable device. The portable device supports at least one application, said contact-less application. The portable device is able to execute the contact-less application when the portable device receives data originating from a short range radio-frequency link.

According to the invention, the portable device is adapted to:
- receive data relating to a triggering of a disabling of the contact-less application; and
- disable, further to a receipt of data relating to a triggering of a disabling of the contact-less application, an execution of the contact-less application.

The invention also relates to a system 10.

Moreover, the invention relates to a method for preventing a misuse of data originating from a portable device 14.

## Description

### Field of the invention:

The invention relates, in a general manner, to a portable device for preventing a misuse of data originating from the portable device. The portable device supports at least one application. The portable device is able to execute the application when the portable device receives data originating from a short range radio-frequency link. The application is qualified as being contact-less.

Within the present description, the adjective "contact-less" used within the expression "contact-less application" means notably that the portable device is accessed, directly or indirectly, via a short range radio-frequency link, by using, for example, International Standardization Organization/ International Electrotechnical Commission (or ISO/IEC) 14 443 specifications or the like.

Furthermore, the invention pertains to a system for preventing a misuse of data originating from a portable device.

Finally, the invention relates to a method for preventing a misuse of data originating from a portable device.

### State of the art:

As known per se, an Near Field Communication (or NFC) enabled handset, as portable device, is used for a mobile payment, as one known contact-less application, so as to pay, instead of using money, a cheque or a credit card, for a service(s) and/or a product(s).

However, the portable device may exchange, through a short range radiofrequency signal, without a user's knowledge, data relating to a user account.

Thus, there is a need to avoid that an unauthorized person with an unauthorized reader steals data originating, through a short range radiofrequency signal, from the portable device and uses the stolen data without the portable device user's knowledge.

### Summary of the invention:

The invention proposes a solution for satisfying the just hereinabove specified need by providing a portable device for preventing a misuse of data originating from the portable device. The portable device supports at least one application, said contact-less application. The portable device is able to execute the contact-less application when the portable device receives data originating from a short range radio-frequency link.

According to the invention, the portable device is adapted to receive data relating to a triggering of a disabling of the contact-less application and disable, further to a receipt of data relating to a triggering of a disabling of the contact-less application, an execution of the contact-less application.

The principle of the invention consists in using a message that addresses to the portable device so as to avoid any running of a contact-less application(s) that reside(s) within the portable device.

Thus, the portable does not allow to transmit, directly (i.e. without any other intermediary device) or indirectly (i.e. via an intermediary device), to outside any data originating from the contact-less application.

The invention solution makes it impossible to extract information from the portable device when a contact-less application has to be implied.

The invention solution prevents an access to data stored and/or generated by the portable device via the contact-less application.

The user has not to be involved to disable an execution of the contact-less application.

The invention solution is therefore convenient and user-friendly.

It is to be noted that the contact-less application may relate to any kind of application or service, such as a mobile ticketing service in public transport, an identification service, a tracking service, a transport service, a wallet service, a bank service, a mobile payment service and/or other service(s).

Preferably, the data relating to a triggering of a disabling of the contact-less application comprises an indication of a change of a cell, the change of a cell consisting in exiting a first cell and entering into a second cell, the first and second cells belonging to a first mobile radio-communication network and a second mobile radio-communication network respectively.

According to a further aspect, the invention is a system for preventing a misuse of data originating from a portable device. The system comprises the portable device and a host device. The portable device is coupled to the host device. The portable device supports at least one application, said contact-less application. The portable device is able to execute the contact-less application when the portable device receives data originating from a short range radio-frequency link.

According to the invention, the host device is adapted to send to the portable device data relating to a triggering of a disabling of the contact-less application, and the portable device is adapted to receive, from the host device, data relating to a triggering of a disabling of the contact-less application, and disable, further to a receipt of data relating to a triggering of a disabling of the contact-less application, an execution of the contact-less application.

As host device, it can be any device including means for processing data, means for sending to and/or receiving data from outside through an interface with a portable, comprising or being connected to means for interfacing with a user, such as a loudspeaker and/or a display screen, and comprising or being connected to means for storing data.

For example, the host device may be an NFC enabled mobile handset, such as a NFC smart telephone, a NFC Personal Digital Assistant (or PDA), a Bluetooth enabled Personal Computer (or PC), a Bluetooth mobile laptop, a Bluetooth portable TeleVision (or TV) and/or an NFC netbook.

As portable device, it can be any electronic device comprising means for processing data, means for sending to and/or receiving data from outside through an interface with a host device, comprising or being connected to means for sending to and/or receiving data from, through a short range radiofrequency link, outside with a contact-less device, and comprising or being connected to means for storing data.

The portable device is any electronic medium that may have different form factors. The portable device can constitute any electronic medium.

For example, the portable device can be a smart card, a (micro)Secure Digital (or SD) type card, a Multi-Media (or MMC) type Card, a smart dongle of the USB (acronym for "Universal Serial Bus") type, a phone accessory connected to the phone, as hot device, such as a phone plug-in, or a chip to be fixed to a user terminal, as host device, possibly in a removable manner, like a sticker.

According to a further aspect, the invention is a method for preventing a misuse of data originating from a portable device. The portable device supports at least one application, said contact-less application. The portable device is able to execute the contact-less application when the portable device receives data originating from a short range radio-frequency link.

According to the invention, the method comprises the following steps:
- the portable device receives data relating to a triggering of a disabling of the contact-less application; and
- the portable device disables, further to a receipt of data relating to a triggering of a disabling of the contact-less application, an execution of the contact-less application.

### Brief description of the drawings:

Additional features and advantages of the invention will be more clearly understandable after reading a detailed description of one preferred embodiment of the invention, given as one indicative and non-limitative example, in conjunction with the following drawings:

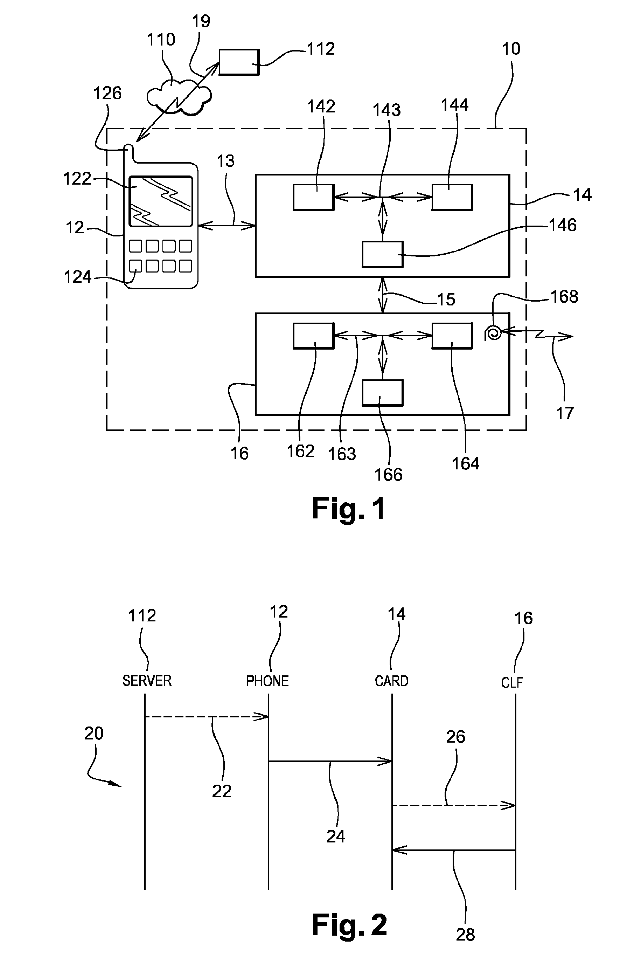

- Figure 1 represents a simplified diagram of one exemplary embodiment of a system for preventing a misuse of data originating from a smart card, as portable device, the system comprising the smart card and a mobile telephone, as host device, the system being adapted, further to data to be received and interpreted by the smart card, to deactivate a contact-less application embedded within the smart card; and
- Figure 2 represents an example of one message flow notably between a remote server, the mobile telephone and the smart card of the system of figure 1, so that the smart card does not perform any action relating to the contact-less application.

### Detailed description:

Herein under is considered a case in which the invention method for preventing a misuse of data originating from a portable device is implemented by a Universal Integrated Circuit Card (or UICC) type smart card, as portable device, in cooperation with an NFC enabled handset, as a host device.

However, the invention method for preventing a misuse of data originating from a portable device may be implemented by a standalone NFC enabled mobile handset, as portable device.

Figure 1 shows one embodiment of a system 10 for preventing a misuse of data originating from a smart card 14.

The system 10 for preventing a misuse of data originating from a smart card 14 comprises a mobile NFC telephone 12, as a host device, a UICC type smart card 14, as a portable device, and a Contact-Less Front-end 16.

For the sake of clarity and conciseness, the mobile NFC telephone 12, the UICC type smart card 14 and the Contact-Less Front-end 16 are termed hereinafter the phone 12, the card 14, and the CLF 16 respectively.

As to the host device, instead of being constituted by a phone, the host device may be, for example, a PC, a desktop computer, a laptop computer, a set top box, a netbook and/or a PDA.

As to the portable device, instead of being constituted by a card, the portable device may be a contact-less smart dongle of the USB type, a host device accessory, or a chip to be fixed to the host device possibly in a removable manner.

The phone 12 includes at least one battery (not represented), at least one microprocessor (not represented), at least one memory (not represented) and at least one I/O interface.

The phone I/O interface includes an interface, so as to exchange data with the card 14.

The phone I/O interface with the card 14 is preferably an ISO 7816 interface, as a contact interface.

The phone I/O interface comprises preferably a display screen 122, a keyboard 124, and an antenna 126.

The display screen 122 and the keyboard 124 may be used for exchanging information between a phone user and the phone 12 or another entity(ies), like the card 14 and/or a remote server 112, which the phone 12 is connected preferably through a mobile communication network(s) 110 to.

The antenna 126 is used for exchanging, through a long-range wireless link 19 and the mobile radio-communication network 110, information with the remote server 112.

The microprocessor of the phone 12 may be connected to the CLF 16 chip, for example, through an Host Controller Interface (or HCl).

The phone 12 may accommodate the card 14.

The phone memory stores data, like user data, and at least one application. As application(s), there is preferably a Web browser, so as to access, through a local Web server embedded within the card 14, one or several contact-less applications supported by the card 14.

The phone microprocessor processes data originating from the phone memory.

The phone microprocessor executes preferably the Web browser, as user interface, so as to interact with the contact-less application(s) supported by the card 14 and offered to the phone user.

The mobile radio-communication network 110 may be connected to an Internet network.

In another embodiment, the mobile radio-communication network is replaced by a (fixed) communication network, such as Internet or Intranet.

The remote server 112 is hosted by a computer and is dedicated to running an application(s) for managing a database and communicating some information of the database to outside.

The database is preferably a tracking of the cell covering, through a base station or the like, the handset(s) that have subscribed (and has a subscriber identity) to the network of the mobile radio-communication network 110 that is(are) switched on (or in idle mode), among which there is the phone 12 (preferably identified by the card 14).

The remote server 112 may manage a plurality of user accounts. The database associates each user account identifier with other data relating to the concerned user account, like a current value of the user account.

The remote server 112 may be operated by either a mobile radio-communication network operator or on its behalf, and/or a service provider or on its behalf, like a bank operator.

The phone 12 is connected to the card 14 and possibly the CLF 16.

The card 14 is connected, through a single wire 15, i.e. one of the eight contacts of the ISO 7816 interface, to the CLF 16 chip.

The card 14, as token or portable device, is connected, through another contact link 13, to the phone 12, as host device.

The card 14 cooperates with, on the one hand, the CLF 16, and on the other hand, the phone 12.

The card 14 includes a microprocessor 142, as means for processing data, at least one memory 144 for storing data, and at least one I/O interface 146 which are all linked together through a control and data bus 143.

The card microprocessor 142 preferably executes security functions, in order to protect an access to information managed through or by the card 14. Among others, the security functions allows to identify a user of the card 14 and/or encrypt data to be sent, in order to be read only by a communication device, such as the remote (Web) server 112, having a corresponding key for decrypting encrypted data (so as to obtain clear data).

The security functions include preferably a user authentication process to be used before accessing the card 14 and/or the remote server 112. To authenticate the user, the card 14 may store an application for verifying a Personal Identity Number (or PIN) securely stored by the card 14 and to be input by the card 14 user, so as to compare the input data with the stored PIN, so as to authorize the running of the application algorithm.

The security functions include preferentially an encryption/decryption process to be used before sending, to an external communication device, like the remote server 112, data, as command, and/or after receiving from the external communication device, data, as response to the sent command, so as to protect an access to the data exchanged between the card 14 and the remote server 112.

The card 14 preferably stores securely, within its memory 144, an International Mobile Subscriber Identity (or IMSI) relating to the mobile phone user, as a unique number associated with all Global Service for Mobiles (or GSM), Universal Mobile Telecommunications System (or UMTS), Code Division Multiple Access (or CDMA) and/or Long Term Evolution (or LTE) type network(s) 110. The mobile radio-communication network list is not exhaustive but only for exemplifying purposes and is not considered to reduce the scope of the present invention.

The IMSI is used to identify a subscriber in relation to one (or several) mobile radio-communication network(s) 110.

The card 14 can store, within its memory 144, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The card 14 stores, preferably within a non-volatile part of the memory 144, one or several contact-less applications.

The card 14 stores, preferably within a non-volatile part of the memory 144, an application algorithm relating to a process, according to the invention, for preventing a misuse of data originating from the card 14, through a part or all the contact-less applications supported by the card 14.

For example, there is a contact-less payment application that is of particular interest for being the subject of the invention process.

The contact-less payment application is arranged to be executed when the card 14 receives, through the CLF 16, data originating from a short range radio-frequency link 17, such as a command for debiting a (card) user account counter with a specified amount value.

According to the invention, the card 14 is adapted to, after having received, from or through the phone 12, data to be interpreted by the card 14, so as to disable an execution of the contact-less payment application and prevent therefore the card 14 from executing the contact-less payment application. A normal execution of the contact-less payment application performs task(s) or action(s) during which a counter value of the user account is decreased by the specified amount value (by subtracting from the current counter value the specified amount value). In the same time, the contact-less entity credits a current counter value with a value corresponding to the specified amount value. A non-execution of the contact-less payment application allows to protect access to data that should have been sent to outside the card 14, and notably, via the CLF 16, through a short range radio-frequency link 17.

The card 14 triggers an execution of the invention application algorithm process only when the card 14 receives from the phone 12 some specific predetermined data relating to a triggering of a disabling of the contact-less payment application.

Preferentially, the specific predetermined data relating to a triggering of a disabling of the contact-less payment application relates to a particular event(s).

As known per se, the particular event(s) is(are) previously registered within the phone 12, so as to inform the card 14, as soon as the concerned event(s) occurs.

The particular event(s) include(s) preferably information originating from the phone 12 that indicates that the phone 12 has moved from a particular known location to an unknown location, such as a home country for the card user to a foreign country, i.e. from a cell covered by a home mobile radio-communication network for the card user to another cell covered by a foreign mobile radio-communication network.

Furthermore, the card 14 may register a list of selected foreign countries that are considered appropriate, i.e. in which there is a risk of theft of data originating from the card 14, through an execution of the contact-less payment application.

The I/O interface 146 of the card 14 is preferably connected, through a single wire 15, i.e. one of the eight contacts of the ISO 7816 interface, to the CLF 16 chip, by implementing a SWP, to exchange data between the card 14 and the CLF 16 chip.

The card microprocessor 142 may execute notably the contact-less payment application, so as to access user account data stored within the card memory 144 from an external contact-less communicating entity, i.e. receive, through the antenna 168 controlled by the CLF 16 chip, data sent by the external contact-less communicating entity, and interpret the read data and initiate one or several actions requested to be performed by the card 14 while possibly involving the phone 12.

The CLF 16 chip forwards to the card 14 data including the possible executable data (or command(s)) received from the external contact-less communicating entity.

The card 14 includes preferably an ISO 7816 interface, so as to let communicate, through a contact link 13, the card 14 and the phone 12.

The communication between the card 14 and the phone 12 may be used in particular to benefit from an access to the mobile radio-communication network(s) 110 to which the phone 12 may be connected.

The CLF 16 is preferably constituted by an element that has been added on at least one phone 12 component, by fixing it to a phone component(s), for example, by sticking the add-on CLF 16 on a phone 12 body part, rendering thus the phone NFC capable (i.e. allowing the phone 12 to benefit from a NFC service(s)).

Alternatively, the CLF 16 is inserted within the phone 12, before (or after) the phone issuing, as an original NFC (or contact-less) compatible phone.

The CLF 16 includes a NFC type chip, an antenna 168 and a connector of a smart card type. The connector is preferably compatible with the ISO 7816 standard.

The CLF 16 chip is connected to the antenna 168 and the connector.

The antenna 168 is arranged to communicate, through a short range radio-frequency link 17, notably with any contact-less entity (not represented) that is external to the phone 12.

The CLF 16 chip plays a role of a modulator-demodulator (or modem) for the card 14, i.e. a device that may:
- modulate an analogical carrier signal to encode digital information received from the card 14 to be transmitted, over the antenna 168, to an external contact-less communicating entity, and/or
- demodulate a received analogical carrier signal to decode the encoded digital information that is received, over the antenna 168, from an external contact-less communicating entity.

The CLF 16 chip may be used in a contact-less card emulation mode (or transponder mode), so as to wait for data originating from an external contact-less communicating entity.

In a preferred embodiment, the CLF 16 chip is arranged notably to translate one contact-less message originating from an external contact-less communicating entity into a message of the Single Wire Protocol (or SWP) type according to ETSI SWP 102 613, and possibly, conversely, i.e. to translate a SWP type message into a contact-less message to an external contact-less communicating entity.

The CLF 16 chip preferably includes at least one microprocessor 162, as data processing means, at least one memory 164, and at least one Input/Output (or I/O) interface 166 which are internally linked together through a data and control bus 163.

The CLF 16 incorporates the antenna 168 that is configured, so as to exchange (at least receive), through a short-range radiofrequency link 17, from an external contact-less communicating entity, data transported by a short-range radiofrequency signal.

The short range radiofrequency is fixed at, for example, 13.56 MHz.

A contact-less communication with the CLF 16 is preferably compatible with the ISO 14 443 standard.

Figure 2 depicts an example of a message flow 20 that involves the phone 12, and the card 14, among others.

It is assumed that only the contact-less payment application of the card 14 is to be automatically disabled when the phone 12 user travels and is in a roaming mode.

It is also assumed that the CLF 16 is used in a contact-less card emulation mode and a contact-less communicating entity, like an NFC reader, is able to perform a transaction with the card 14 contact-less payment application (with or without card 14 user's knowledge).

It is further assumed that the phone 12 exits from a cell covered by a home country and enters a cell covered by a foreign country for the card user. The foreign country is registered by the card 14 where the card 14 has to deny access to the contact-less payment application through the contact-less link, when the card 14 has detected, through the phone 12, that the card user is in a roaming mode, as the event (previously sent from the card 14 to the phone 12) for triggering a disabling of an execution of the contact-less payment application.

In a preferred embodiment, the phone 12 stores an Elementary File relating to LOCation Information (or EF LOCI) which registers information relating to a current cell under radio coverage of the mobile radio-communication network 110.

As soon as the phone 12 detects, thanks to an update of the EF LOCI, that the phone 12 exits from a cell covered by a mobile radio-communication network and enters into another cell covered by another radio-communication network relating to a foreign country, the phone 12 (and more exactly its microprocessor) addresses to the card 14 (and more exactly its microprocessor) a corresponding message 24 for informing the card 14 that the phone 12 has moved to a foreign country.

According to another embodiment, the remote server 112 sends, through the mobile radio-communication network 110, to the phone 12, a message 22, such as a Short Message Service (or SMS) message Point to Point (or PP) download command or a Transmission Control Protocol and the Internet Protocol (or TCP/IP) message, for sending to the card 14 either a command for disabling an execution of the contact-less payment application or data relating to a triggering of a disabling of an execution of the contact-less application.

The phone 12 sends to the card 14 a corresponding command for disabling an execution of the contact-less payment application.

As known per se, an element of the mobile radio-communication network, such as a Home Location Registry (or HLR) or the like, allows locating a mobile phone under radio coverage of the mobile radio-communication network. Such a network element informs the remote server 112 about the phone 12 location.

Then, the card 14 verifies whether the visited foreign country is forbidden or not, so as to trigger an execution of the contact-less payment application through a short range radio-frequency link, as a contact-less link.

If the visited foreign country is allowed, then the card 14 does not bar any access to the contact-less payment application through a short range radio frequency link. In other words, the card 14 enables an execution of the contact-less payment application when triggered via a short range radio frequency link from an external contact-less communication device.

On the contrary, i.e. if the visited foreign country is forbidden, then the card 14 disables an execution (by the card 14) of the contact-less payment application that is accessed through a short range radio frequency link.

The card 14 controls automatically an access to the contact-less payment application, as to the contact-less application(s), by enabling or disabling an execution of the contact-less payment application that is accessed through a short range radio frequency link.

Optionally, the card 14 sends to the CLF 16 a command 26 for disabling the NFC capacity, so that the CLF 16 does not forward to the card 14 any data or command originating from an external contact-less communication entity.

In particular, if an unauthorized user moves a contact-less communication entity, such as an NFC reader, in a close vicinity (up to 20 cm) to the phone 12, the CLF 16 sends to the card 14 data 28 or a command 28 originating from the external contact-less communication entity, then the card 14 merely ignores the received data or command 28 by not performing any task(s) and/or action(s) included within the contact-less payment application.

Optionally, if the card 14 user desires to access the contact-less payment application, then the card 14 authenticates previously the card user by verifying that a PIN entered, through the phone keyboard (or another phone man machine interface), by the user matches the PIN stored within the card 14.

Alternatively, if the phone 12 comes back to the home country for the card user and enters into a cell covered by the mobile radio-communication network of the home country, then the phone 12, after having updated its EF LOCI, informs the card 14 by sending this latter a message for indicating a come back to the home country. Then, the card 14 detects that the visited country is authorized and enables an execution of the contact-less payment application through a short range radio-frequency link.

A lot of amendments of the embodiment described supra may be brought without departing from the invention spirit. For example, instead of an event relating to a roaming from a home country to a foreign country, the event that allows a triggering of a disabling of an execution of the contact-less application may be an entry into a specific geographical area, i.e. in an independent manner of the geographical area from which the card user comes.

## Claims

1. A portable device (14) for preventing a misuse of data originating from the portable device, the portable device supporting at least one application, said contact-less application, the portable device being able to execute the contact-less application when the portable device receives data originating from a short range radio-frequency link (17),
**characterized in that** the portable device is adapted to:
- receive data relating to a triggering of a disabling of the contact-less application; and
- disable, further to a receipt of data relating to a triggering of a disabling of the contact-less application, an execution of the contact-less application.

2. Device according to claim 1, wherein the data relating to a triggering of a disabling of the contact-less application comprises an indication of a change of a cell, the change of a cell consisting in exiting a first cell and entering into a second cell, the first and second cells belonging to a first mobile radio-communication network and a second mobile radio-communication network respectively.

3. Device according to claim 1 or 2, wherein the portable device is coupled to a host device (12).

4. Device according to any of claims 1 to 4, wherein the portable device comprises a Subscriber Identity Module type card.

5. A system (10) for preventing a misuse of data originating from a portable device, the system comprising the portable device (14) and a host device (12), the portable device being coupled to the host device, the portable device supporting at least one application, said contact-less application, the portable device being able to execute the contact-less application when the portable device receives data originating from a short range radio-frequency link (17),
**characterized in that** the host device is adapted to send to the portable device data relating to a triggering of a disabling of the contact-less application;
and **in that** the portable device is adapted to:
- receive, from the host device, data relating to a triggering of a disabling of the contact-less application; and
- disable, further to a receipt of data relating to a triggering of a disabling of the contact-less application, an execution of the contact-less application.

6. System according to claim 6, wherein the system further comprises a Near Field Communication type chip (16), the portable device being connected to the Near Field Communication type chip.

7. A method for preventing a misuse of data originating from a portable device (14), the portable device supporting at least one application, said contact-less application, the portable device being able to execute the contact-less application when the portable device receives data originating from a short range radio-frequency link,
**characterized in that** the method comprises the following steps:
- the portable device receives data (24) relating to a triggering of a disabling of the contact-less application; and
- the portable device disables, further to a receipt of data relating to a triggering of a disabling of the contact-less application, an execution of the contact-less application.

8. Method according to claim 7, wherein, the portable device being coupled to a host device (12), the host device sends to the portable device the data relating to a triggering of a disabling of the contact-less application.

9. Method according to claim 7, wherein, the portable device being coupled to a host device (12), the host device being connected to a mobile radio-communication network (110), a remote server (112) being connected to the mobile radio-communication network, the remote server sends, through the host device, to the portable device a message (22) including the data relating to a triggering of a disabling of an execution of a contact-less application.

10. Method according to claim 9, wherein the message including the data relating to a triggering of a disabling of the contact-less application comprises a command for disabling an execution of a contact-less application and/or data relating to an indication of a change of a cell.
